# EUROPÄISCHE PATENTANMELDUNG

(11) **EP 4 379 684 A1**
(43) Veröffentlichungstag der Anmeldung: **05.06.2024**
(21) Anmeldenummer: 23213837.0
(22) Anmeldetag: 01.12.2023
(51) Int. Cl.: G07C 9/10, G07C 9/20, G07C 9/30, G07B 15/04

(54) **SYSTEM UND VERFAHREN ZUR FREIGABE EINES DURCHGANGWEGES**

(30) Priorität: 02.12.2022 DE 102022132054
(71) Anmelder: Wanzl GmbH & Co. KGaA, 89340 Leipheim (DE)
(72) Erfinder: Pfitzmaier, Markus, 89358 Kammeltal (DE); Ruf, Tobias, 89331 Burgau (DE)

(57) **Zusammenfassung**

Die Erfindung bezieht sich auf ein Verfahren und ein System zur selektiven Freigabe eines Durchganges für einen Anwender in Verbindung mit dem Vorliegen eines zugunsten des Anwenders erfolgten Berechtigungserwerbs, wobei das Vorliegen des Berechtigungserwerbs im Bereich des Durchganges aus der Erkennung eines Ereignisses abgeleitet wird, das im Rahmen des Berechtigungserwerbs dem Anwender als freigabeindikativ zugeteilt worden ist.

## Beschreibung

Die Erfindung richtet sich auf ein System sowie auf ein Verfahren zur Freigabe eines durch ein Gate hindurchführenden Durchgangsweges in Verbindung mit einem Freigabekriterium das sich aus einer Anwenderoperation ableitet.

Insbesondere im Bereich des Einzelhandels finden in zunehmendem Maße Bezahlsysteme Anwendung, bei welchen die vom Anwender zu erwerbenden Produkte selbst über eine Scanneranordnung eines Kassensystems geführt werden oder schon beim Einlegen in eine Transportgerätschaft gescannt werden. Die hierbei erfassten Informationen oder Daten werden der Berechnung der Kosten für eine entsprechende Warenzusammenstellung zugrunde gelegt. Nach Abschluss eines Bezahlvorganges kann der Anwender die erworbenen Waren aus dem Bereich des Kassen- oder Bezahlsystems hinaus verbringen. Diese Kassensysteme werden allgemein durch Kameraeinrichtungen überwacht um sicherzustellen, dass sämtliche Waren zuverlässig erfasst, insbesondere über die Scanneranordnung geführt und dort eingelesen werden.

Der Erfindung liegt die Aufgabe zugrunde Lösungen zu schaffen, durch welche es möglich wird, GateEinrichtungen vorteilhaft anzusteuern, insbesondere um nichtautorisierte Passagen derselben zu vermeiden oder um sicherzustellen, dass ein Verlassen eines Warenerwerbsbereichs in Verbindung mit einem korrekten Bezahlvorgang zugelassen, anderenfalls verhindert werden kann.

Diese Aufgabe wird gemäß einem ersten Aspekt der vorliegenden Erfindung erfindungsgemäß gelöst durch ein System zur selektiven Freigabe eines Durchganges für einen Anwender in Verbindung mit dem Vorliegen eines zugunsten des Anwenders erfolgten Berechtigungserwerbs, wobei das Vorliegen des Berechtigungserwerbs im Bereich des Durchganges aus der Erkennung eines Referenzphänomens oder Ereignisses abgeleitet wird, das im Rahmen des Berechtigungserwerbs dem Anwender als freigabeindikativ zugeteilt worden ist.

Dadurch wird es auf vorteilhafte Weise möglich, die Freigabe eines Durchganges auf der Grundlage eines Auswertungsprozesses zu veranlassen, bei welchem das Vorliegen einer Freigabeberechtigung in Verbindung mit einer Eigenschaft feststellbar ist, die sich mit der physischen Anwesenheit des Anwenders oder der erworbenen Waren im Bereich des Durchganges ergibt. Vorteilhafte Ausgestaltungen dieses Systems sind Gegenstand der Unteransprüche.

Das erfindungsgemäße System ist vorzugsweise derart aufgebaut, dass dieses ein Gate umfasst. Das Gate weist hierbei ein Sperrorgan auf, das selektiv in einen Sperrzustand oder in einen Freigabezustand bringbar ist. Bei Einnahme des Sperrzustands ist ein durch das Gate hindurchführender Durchgangsweg für einen Anwender gesperrt. Bei Einnahme des Freigabezustands des Sperrorganes kann der Anwender das Gate auf dem durch dieses hindurchführenden Durchgangsweg passieren. Das Sperrorgan ist hierbei vorzugsweise mit einer Antriebseinrichtung gekoppelt und wird durch Ansteuerung der Antriebseinrichtung in die Sperrstellung oder in die Freigabestellung verlagert. Es ist auch möglich, das Sperrorgan so zu gestalten, dass dieses unter Einwirkung anwenderseitig aufgebrachter Kräfte in die Freigabestellung verlagerbar ist sofern eine elektromechanische Verriegelungseinrichtung entsprechend angesteuert wird.

Das Gate kann als unidirektional öffnendes Gate ausgelegt sein, dessen Sperrorgan nur in eine Richtung öffnet, oder bei welchem die Auslösung des Sperrorganes nur von einer Seite des Gates aus veranlassbar ist. Das Gate kann auch als bidirektional öffnendes Gate ausgebildet sein, dessen Öffnung von beiden Seiten des Durchgangsweges aus veranlassbar ist und das im Regelbetrieb von beiden Seiten her durchschritten werden kann. Die Öffnungsrichtung des Sperrorganes kann in Abhängigkeit von Kriterien festgelegt werden die beispielsweise von der Art der Zugangsrichtung abhängig sind oder von der Art etwaige Transportgerätschaften, die in den Durchgangsweg des Gates einpassieren. Die Öffnung des Gates in Richtung des Verlassens eines Warenerwerbsbereiches kann von dem Vorliegen eines Berechtigungserwerbes abhängen, das Öffnen des Gate bei Zugang zu einem Warenerwerbsbereich kann lediglich von einem Betreten des Gates abhängig gemacht werden, wenn sich auf der anderen Seite keine Person befindet, die dieses Gate in Richtung Verlassen des Warenerwerbsbereiches betritt. Das Öffnen des Gates kann auch bei Erkennung bestimmter Transportgerätschaften, die nur von autorisiertem Personal verwendet werden automatisiert öffnen. Beispielhafte Transportgerätschaften sind hierbei Kommissionierwagen, fahrbare Regal- und Auslagensysteme, Palettenhubwagen insbesondere sog. Ameisen.

Das erfindungsgemäße System umfasst weiterhin vorzugsweise eine Einrichtung zur Abwicklung eines Bezahlvorganges. Dieser Bezahlvorgang kann über eine Terminaleinrichtung abgewickelt werden. Das Terminal ist vorzugsweise derart aufgebaut, dass dieses unterschiedliche Zahlungsmöglichkeiten bereitstellt. Das Terminal kann insbesondere so aufgebaut sein, dass dieses eine bargeldlose Zahlung ermöglicht. Diese bargeldlose Zahlung kann hierbei vorzugsweise insbesondere unter Einbindung eines Mobiltelefons, insbesondere Smartphones abgewickelt werden. Das System kann in Abhängigkeit von der Weise der Bezahlung unterschiedliche Modis bereitstellen die für die Passage des Gates, insbesondere für die Herbeiführung des Freigabezustandes des Sperrorganes herangezogen werden. Diese Modis können gemäß einem besonderen Aspekt der vorliegenden Erfindung in vorteilhafter Weise kombiniert werden, wodurch eine hohe Schutzwirkung gegen Manipulationen erreicht wird.

Das System umfasst vorzugsweise eine Scannereinrichtung zur Erfassung von anwenderseitig zu erwerbenden Waren. Diese Scannereinrichtung kann hierbei insbesondere auf den Waren vorgesehene Kennzeichnungen erkennen, oder auch anderweitige Eigenschaften der Waren, vorzugsweise insbesondere deren Raumform oder Erscheinung. Diese Warenerkennung wird zunächst der Berechnung oder Angabe des Kaufpreises zugrundegelegt.

Gemäß einem besonderen Aspekt der vorliegenden Erfindung kann das System so aufgebaut und betrieben werden, dass es sich bei dem für die Überprüfung der "Exitberechtigung" herangezogenen Ereignis oder Referenzphänomen um die Erkennung der Raumform oder Erscheinung einer erworbenen Ware oder erworbenen Warenzusammenstellung handelt. Diese Raumform kann in besonders vorteilhafter Weise im Rahmen des Scannens der Ware erfasst werden, sie kann jedoch alternativ hierzu oder in Kombination mit der erstgenannten Maßnahme durch eine weitere Kameraeinrichtung oder Sensoreinrichtung ermittelt werden. Weiterhin kann die Raumform der Waren nach dem Scannen und Identifizieren derselben oder in Verbindung hiermit auch unter Rückgriffnahme auf Raumdaten, d.h. Raumdatenmodelle ermittelt werden. Die erworbenen Waren können in eine Transportgerätschaft, insbesondere einen Einkaufswagen eingelegt werden. Dieses Einlegen der Waren wird vorzugsweise durch die Sensoreinrichtung erfasst. Die Erfassung kann sukzessive erfolgen, so dass sämtliche eingelegte Waren erfasst werden. Weiterhin kann durch diese Erfassung die Raumform der Warenzusammenstellung insbesondere mit Blick auf die räumliche Struktur der oberen Warenlage erkannt werden.

Nach erfolgreicher Abwicklung eines Zahlvorganges können ein Referenzphänomen, ein Ereignis oder mehrere Ereignisse oder Sachverhalte definiert werden, deren Feststellung im Bereich des Gates eine Passage des Gates erlauben.

Wird beispielsweise ein Zahlvorgang über ein Mobiltelefon, vorzugsweise in Verbindung mit einer für diesen Einzelhandel vorgesehenen App abgewickelt, kann für die Passage des Gates eine Interaktion unter Einbindung des Mobiltelefones vorgesehen werden. Hierzu kann der Anwender eine Anzeige auf dem Mobiltelefon im Bereich des Gates zur Auslesung bereitstellen, oder - gemäß einem weiteren besonderen Aspekt der Erfindung - er kann eine im Bereich des Gates vorgesehenen Kennung, z.B. einen QR-Code mit der Kamera seines Mobiltelefons einlesen. Das erfindungsgemäße System leitet aus dem Einlesen dieser Kennung die Erfüllung eines Kriteriums ab, ob sich der Anwender im Bereich des Gates befindet. Werden in Verbindung mit diesem Ortskriterium weitere Kriterien, z.B. bezüglich des erfolgreichen Zahlvorganges, erfüllt, so erlaubt das Gate eine Passage des Anwenders und öffnet dementsprechend.

Das zur Öffnung des Gates herangezogenen Referenzphänomenn oder Ereignis kann auch in der verwendeten Warentransportgerätschaft liegen. So kann beispielsweise dann, wenn ein Bezahlvorgang erfolgreich abgewickelt wurde, die mittel Erfassungsorganen erfasste und erkannte Raumform des in diesem Bereich soeben verwendeten Warentransportgerätes als Ereignis definiert werden, das eine Öffnung des Gates erlaubt oder herbeiführt. Es ist möglich, hierzu an den Warentransportgerätschaften Strukturen, Kennungen und/oder optische Geber (insbesondere CodeGeber) vorzugsehen, die einen möglichst hohen Individualisierungsgrad der Warentransportgerätschaft generieren.

Es ist in vorteilhafter Weise möglich, an der Transportgerätschaft Ausgabeeinrichtungen vorzugsehen, die ein Signal generieren. Vorzugsweise wird das Signal von einer Ausgabeeinrichtung ausgegeben, die an eine Warentransportgerätschaft angebunden oder in diese eingebunden ist. Dieses Signal kann auf optischem Wege bereitgestellt werden. Dieses optische Signal liegt vorzugsweise außerhalb des für einen Anwender sichtbaren Wellenlängenbereichs von Licht. Es kann durch eine signaltechnisch gepulst angesteuerte Diodeneinrichtung generiert werden. Die so optisch ausgesendete Signalsequenz kann einen Code oder einen Informationswert beinhalten.

Bei dem zur Öffnung des Gates mit herangezogenen Ereignis kann es sich weiterhin auch um den Verlauf eines Weges handeln, den der Anwender zwischen dem Ort des Berechtigungserwerbs und dem Durchgang begeht. In Kombination hiermit oder alternativ hierzu kann es sich bei diesem Ereignis um eine Information handeln, die seitens des Anwenders durch ein Mobiltelefon bereitstellbar ist. Diese Information ist vorzugsweise erst am Ort des Durchganges bereitstellbar, wobei die Präsenz am Ort des Durchganges über das Mobiltelefon des Anwenders nachgewiesen wird. Der Nachweis der Präsenz des Anwenders am Durchgang kann wie oben bereits angesprochen in vorteilhafter Weise unter Nutzung der Kamera eines anwenderseitigen Mobiltelefons erbracht werden.

Das dem erfindungsgemäßen System zugrundeliegenden Konzept sieht vor, dass ein im Bereich der zur Kaufpreisbekanntgabe erfolgten Warenhandhabung vorliegendes Ereignis, eine Tatsache oder ein Zustand bestimmt werden, das/die/der in Verbindung mit einem erfolgreichen Zahlvorgang dann als Berechtigungsnachweis an einem Gate zur Herbeiführung einer Öffnung desselben herangezogen werden. Dieses Ereignis kann in einem optischen Phänomen, insbesondere einer Bildinformation, in der Mitführung eines Mobiltelefons des Anwenders bestehen, dieses Ereignis kann in der Raumform oder Erscheinung der erworbenen Ware oder Warenzusammenstellung bestehen, es kann in der Verwendung eines Einkaufswagens - oder auch in einer Kombination mehrerer derartiger Ereignisse oder Verhalte bestehen. Soweit dieses Phänomen auf optischem Wege aufgezeichnet wird, kann die in vorteilhafter Weise durch eine Kameraeinrichtung erfolgen. Diese Kameraeinrichtung ist vorzugsweise derart angeordnet, dass das von dieser aufgenommene Bild auf den Anwender und/oder die erworbenen Waren oder die Transportgerätschaft aus einer optischen Achse blickt, die weitgehend die gleiche Ausrichtung hat, wie die optische Achse einer im Bereich der Gateeinrichtung vorgesehenen Kameraeinrichtung.

Das erfindungsgemäße System eignet sich insbesondere für Anwendungen, bei welchen ein Zugang zu einem Zwischenbereich über mehrere Kassensysteme und ein Verlassen des Zwischenbereiches durch mehrere Durchgangsanlagen ermöglicht ist. Das erfindungsgemäße System ermöglicht dabei eine Durchmischung von Personenströmen in dem Zwischenbereich und ein Verweilen unterschiedlicher Personen oder Anwender mit unterschiedlichen Verweilzeiten in dem Zwischenbereich. Das dem jeweiligen Anwender zuerkannte und für den Autorisierungserwerb indikative Ereignis oder Merkmal kann einen "Zeitstempel" tragen, so dass dieses nur für eine definierte Zeitspanne zwischen Berechtigungserwerb und Betreten der Durchgangsanlage wirksam ist oder volle Gültigkeit hat. Die Anforderung an Spezifität des Referenzphänomens, des indikativen Ereignisses oder Merkmals kann davon abhängig gemacht werden wie hoch die momentane Nutzungsfrequenz der Durchgangsanlagen oder der Bezahlsysteme ist. Bei geringer Nutzungsdichte kann das System in einem Modus betrieben werden, der eine geringere Spezifität des für den Nachweis des Berechtigungserwerbs herangezogenen Ereignisses oder Merkmals vorsieht oder fordert. Soweit das System erkennt, dass momentan nur ein einziger Anwender eine Berechtigung zum Durchgang durch die Durchgangsanlage erlangt hat, kann die Durchgangsanlage in einem Modus betrieben werden, der ein einfaches Öffnen bei Betreten der Durchgangsanlage vorsieht. Bei mittlerem Benutzungsaufkommen kann anstelle einer hochauflösenden Raumformerfassung beispielsweise ein spektraler Mittelwert eines Bildes herangezogen werden das im Umfeld des Berechtigungserwerbs von der Ware, der Warenzusammenstellung und/oder der Warenzusammenstellung in einer Transportgerätschaft erfasst wurde. Der Berechtigungserwerb erfolgt vorzugsweise in Verbindung mit einem Bezahlvorgang, oder einem Vorgang der anderweitig eine grundsätzliche Autorisierung zum Erwerb oder Verbringen von Waren aus einem Übergabebereich darstellt oder generiert. Die Zuerkennung des Referenzphänomens, Ereignisses oder des Merkmals das dann im folgenden als temporärer Nachweis für den Berechtigungserwerb gehandhabt wird, wird in einem Abschnitt des erfindungsgemäßen Systems ermittelt in welchem für die erworbene Ware oder Waren Zusammenstellung der Zustand einer hinsichtlich der Zahl ihrer Elemente festgelegten Gruppe besteht, d.h. keine Waren mehr hinzugefügt oder entfernt werden. In diesem Übergabebereich ist der Anwender dann als Einzelakteur präsent und von weiteren Anwendern derart weit entfernt, dass keine Vermischung der von ihm zu erwerbenden oder erworbenen Waren mit Waren von anderen Anwendern erfolgt. Das erfindungsgemäße System kann einem Anwender mehrere Ereignisse oder Merkmale zuteilen, die im Bereich eines Durchgangs einzeln oder in Kombination als Nachweis für den Berechtigungserwerb zum Durchschreiten des Durchganges dienen können. Es können also Feststellungen zur Raumform der Ware, zur Raumform einer Warenzusammenstellung, zur verwendeten Transportgerätschaft, zu spektralen Merkmalen der Warenzusammenstellung, der Erscheinung des Anwenders, zum Inhalt von Signalen von Sendern oder Transpondern, oder Signalen von mobilen Kommunikationsgeräten für sich oder in Kombination zur Ansteuerung einer Durchgangsanlage herangezogen werden. Insbesondere kann ein als bluetooth-Signal, NF-Signal oder anderweitig von einem Mobiltelefon generierter Informationsinhalt in Verbindung mit einem weiteren, insbesondere optisch erfassbaren Ereignis zur Feststellung des Vorliegens eines Berechtigungserwerbs und damit zur Ansteuerung einer Durchgangsanlage herangezogen werden.

Die Durchgangsanlage kann so betrieben werden, dass diese eine Schleusenfunktion bewirkt, durch welche für den Anwender ein bestimmter Laufweg festgelegt wird. Es ist möglich den Übergabebereich der Waren so zu gestalten, dass dieser eine Zone zur Warenaufgabe und eine hiervon beabstandete Zone zur Warenvereinnahmung durch den Anwender umfasst. In dem Zwischenbereich zwischen diesen beiden Zonen können unterschiedliche Erfassungseinrichtungen zur individuellen Warenerfassung vorgesehen sein. Diese Erfassungseinrichtung kann eine personenassistierte Warenerfassung beinhalten. So können beispielsweise mehrere Aufgabezonen von unterschiedlichen Anwendern genutzt werden, im Rahmen der Warenaufgabe erfolgt eine erste Erfassung der Waren und nach Maßgabe eines Sicherheits- oder auch Zufallskriteriums eine Vorbeischleusung an einem personenassistierten Erfassungsbereich oder eine Hindurchschleusung durch diesen. Nach der Erfassung der Waren erfolgt in Verbindung mit einem Bezahlvorgang oder einem Zuordnungsvorgang ein Berechtigungserwerb für die Mitnahme der erfassten Waren. Dieser Berechtigungserwerb erlaubt den Durchgang durch eine Durchgangsanlage. Der Nachweis des Berechtigungserwerbes wird unter Feststellung eines Merkmals erbracht, das dem Anwender im Rahmen des Berechtigungserwerbs als hierfür indikativ zugeteilt wird. Dieses Merkmal besteht insbesondere in der optischen oder räumlichen Erscheinung der erworbenen Waren oder Warenzusammenstellung, einer verwendeten Transportgerätschaft und/oder eines Mobiltelefons des Anwenders. Das Gate oder die Durchgangsanlage öffnet, wenn feststeht, dass sich ein berechtigter Anwender in der Durchgangsanlage befindet oder auf diese zuschreitet, die örtliche Präsenz kann durch eine Interaktion des Anwenders im Bereich der Durchgangsanlage festgestellt werden, insbesondere eine Interaktion mit Mitteln, die nur im Bereich der Durchgangsanlage zur Verfügung stehen.

Gemäß einem weiteren Aspekt der vorliegenden Erfindung wird die eingangs angegebene Aufgabe erfindungsgemäß auch gelöst durch ein Verfahren zur selektiven Freigabe eines Durchganges für einen Anwender in Verbindung mit dem Vorliegen eines zugunsten des Anwenders erfolgten Berechtigungserwerbs, wobei:
- im Rahmen des Berechtigungserwerbes eine Eigenschaft des Anwenders, der Waren und/oder einer Warentransportgerätschaft festgelegt wird,
- im Bereich des Exit-Gates eine Untersuchung hinsichtlich des Vorliegens dieser Eigenschaft abgewickelt wird und
- bei Vorliegen dieser Eigenschaft das Exit-Gate in einen Durchgangszustand verbracht wird, der einen Durchgang durch das Exit-Gate gestattet.

Die Abwicklung des erfindungsgemäßen Verfahrens erfolgt vorzugsweise unter Rückgriffnahme auf das oben beschriebene System. Dieses System kann durch Komponenten realisiert werden, deren Funktionscharakteristik durch Konfiguration dieser Komponenten oder einer mit diesen zusammenarbeitenden Steuerung bedarfsgerecht abgestimmt wird. So können beispielsweise verwendete Gateeinrichtungen so ausgelegt werden, dass diese eine Passage bei Erfüllung bestimmter Kriterien ermöglichen und andererseits eine Passage bei aktiver Erfüllung definierter Kriterien nicht gestatten. Für letzteren Fall bestehen Anwendungsmöglichkeiten für das Verlassen des Geländes eines Supermarktes. Wird hier im Bereich eines Gates erkannt, dass eine Passage desselben in Verbindung mit einer Transportgerätschaft angestrebt wird, schließt das Gate oder verbleibt in einer Schließstellung. Hierdurch wird einer Entwendung der Transportgerätschaft vorgebeugt. Gleiches kann bei der Verwendung von Transportgerätschaften bei sog. Shop in Shop Verkaufsbereichen vorgesehen werden, oder im Grenzbereich zwischen Zonen mit unterschiedlichen Anforderungen für die Aufenthaltsberechtigung, Insbesondere in Flughafenbereichen kann hierbei eine Mitnahme einer Transportgerätschaft in einen Bereich vermieden werden in welchem die Verwendung der Transportgerätschaft nicht vorgesehen ist.

Die Erfassung des als Nachweis zum Berechtigungserwerb herangezogenen Ereignisses, kann in einem Umfang erfolgen, der größer ist als der Informationsumfang der bei der Passage eines Gates abgefragt wird. So kann die optische Erfassung des Anwenders im Bereich des Berechtigungserwerbs mit einer hohen Auflösung erfolgen, wogegen im Bereich des jeweiligen Gates eine ggf. dort abgewickelte Bilderfassung mit geringerer Auflösung erfolgt.

Nach einem weiteren besonderen Aspekt kann eine im Bereich des Gates vorgesehene Einrichtung zur Bilderfassung konfigurationsabhängig dazu verwendet werden, Bildinformationen für eine Bilderkennung, insbesondere eine Al-basierte Bilderkennung zu erfassen und/oder für die Erfassung optischer Ereignisse die von einer oben genannten Gebereinrichtung generiert werden, wie insbesondere Lichtpuls-Sequenzen mit einem Informationsinhalt. Im Bereich des Gtes ist eine dort ggf. vorgesehene optische Erfassungseinrichtung, insbesondere Kamera in einer Ausrichtung und Position vorgesehen, die zumindest weitgehend der Position entspricht aus welcher auch das oben genannte Referenzereignis ermittelt wurde.

Das erfindungsgemäße Konzept ermöglicht auch eine weitere besondere Anwendungsmöglichkeit. So kann neben der Verwendung von Gerätschaften die z.B. eine grundsätzliche Gate-Öffnung herbeiführen, z.B. Bestückungswagen, Kommissionierwagen, Kartonagenwagen, Hubwagen...eine Öfnung auch davon abhängig gemacht werden, ob sich der Anwender aus einem sog. privilegierten Bereich hinaus durch eine Allgemeinzone hindurch in einen Warenerwerbsbereich hinein bewegen möchte. So kann eine Transportgerät das zur Verbringung von Waren aus einem Lagerbereich verwendet wurde automatisiert eine Öffnung des angesteuerten Gates veranlassen, indem es dort "wiedererkannt" wird. Die Berechtigungserlangung ist dann nicht durch einen Bezahlvorgang definiert, sondern daraus, dass ein sich als grundsätzlich berechtigender Betriebsablauf des Anwenders abgewickelt wird.

Gemäß einem weiteren Aspekt der vorliegenden Erfindung wird die eingangs angegebene Aufgabe auch gelöst durch eine Gateeinrichtung zur Bereitstellung eines selektiv sperrbaren Durchgangsweges durch Ansteuerung eines Sperrorganes das in eine Freigabestellung und in eine Sperrstellung verlagerbar ist, wobei das Sperrorgan an eine Pfosten- oder Geländereinrichtung angebunden ist und in einem oberen Bereich der Pfosten oder Geländereinrichtung eine Erfassungseinrichtung vorgesehen ist, wobei die Erfassungseinrichtung derart ausgebildet ist, dass diese Bilddaten eines sich auf das Gate zubewegenden und/oder durch dieses hindurchbewegenden Anwenders oder einer Transportgerätschaft erhebt und die so erfassten Bilddaten einer Auswertung unterzogen werden, wobei die Ansteuerung des Sperrorganes in Verbindung mit dem Ergebnis der Auswertung abgewickelt wird. Es ist möglich, die Auswertung der Bilddaten durch eine im Bereich des Gates vorgesehene hinreichend leistungsfähige Rechnereinrichtung abzuwickeln. Die Auswertung kann auch durch eine örtlich vom Gate beabstandete Rechnereinrichtung, insbesondere ein Anlagensteuerungssystem abgewickelt werden. Es ist möglich bestimmte Kriterien durch eine im Bereich des Gates vorgesehene Rechnereinrichtung abzuarbeiten und anderweitige Kriterien, insbesondere in dem Fall, dass auf Grundlage der lokalen Auswertung keine Freigabe des Gates erfolgt die erfassten Bilddaten an einer weiteren Rechnereinrichtung auszuwerten und zu bewerten, ggf. einen manuellen Prüfprozess einzuleiten oder am Gate den Anwender zur Bereitstellung anderweitiger Berechtigungsnachweise aufzufordern, beispielsweise einen Kassenbeleg über die Erfassungseinrichtung zur Erfassung bereitzustellen.

Das erfindungsgemäße Konzept kann auch dazu genutzt werden, die Herbeiführung eines Öffnungszustandes eines Gates in besonderer Weise herbeizuführen. So kann die Öffnungsrichtung des Gates, d.h. das Schwenken eines dort vorgesehenen Sperrgliedes davon anhängig gemacht werden, zu welchem Ergebnis die durch die am Gate vorgenommenen Erfassung des Anwenders führt. So kann ein Öffnen aufgrund der Verwendung einer für die Warenbestückung vorgesehenen Transportgerätschaft in eine Richtung des Zutritts oder der Zufahrt erfolgen, so dass das Schwenken einerseits keine anderweitige Person tangiert, zudem kann das Sperrglied dann unmittelbar hinter dem Anwender wieder schließen, so dass kein Durchgang durch eine spontan nachfolgende Person ermöglicht wird. Der Schließvorgang eines derart geöffneten Sperrglieds kann durch leichte manuelle Betätigung desselben herbeigeführt werden. Diese Operation kann über ein elektrisches Phänomen erkannt werden, das über die Antriebseinrichtung des Sperrgliedes erfassbar ist.

Weitere Einzelheiten und Merkmale der Erfindung ergeben sich aus der nachfolgenden Beschreibung in Verbindung mit der Zeichnung. Es zeigt:

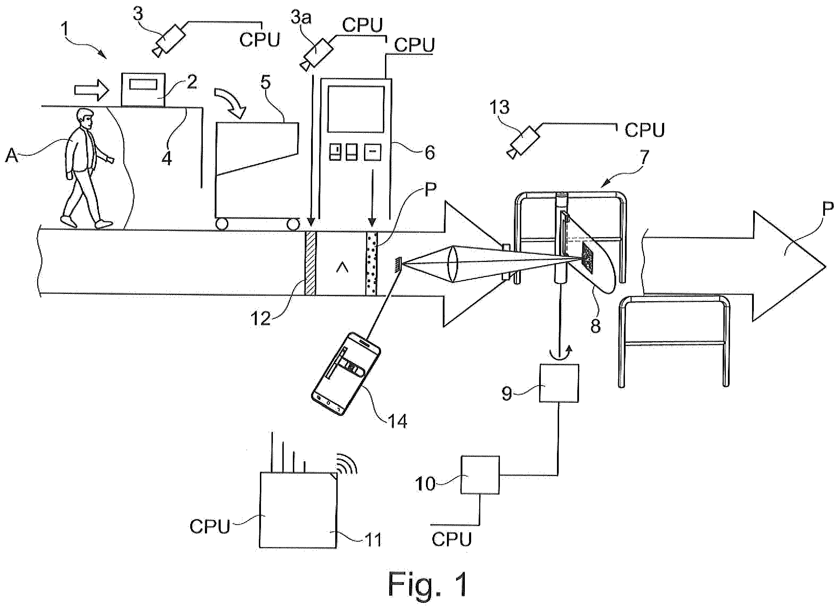

- **Figur 1**: eine Schemadarstellung zur Veranschaulichung des Aufbaus und der Funktionsweise eines erfindungsgemäßen Systems;

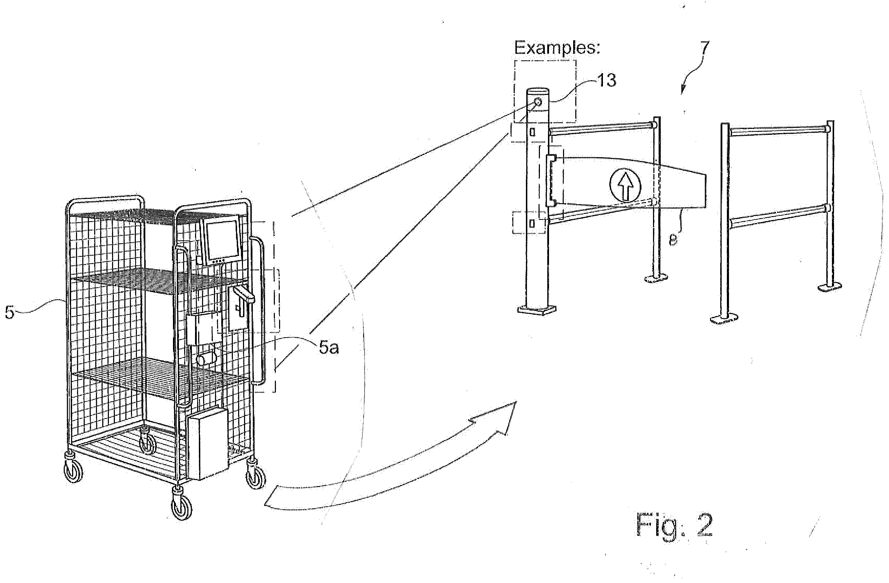

- **Figur 2**: eine vereinfachte Darstellung eines erfindungsgemäßen Systems mit einer Kameraeinrichtung durch welche die Raumform oder die optische Erscheinung einer zu einem Durchgang verbrachten Transportgerätschaft oder Warenzusammenstellung erfasst und bildverarbeitend bewertet und erkannt wird, wobei unter Rückgriffnahme auf diesen Erkennungsprozess der Durchgang in einen Freigabezustand gebracht wird oder gesperrt bleibt;

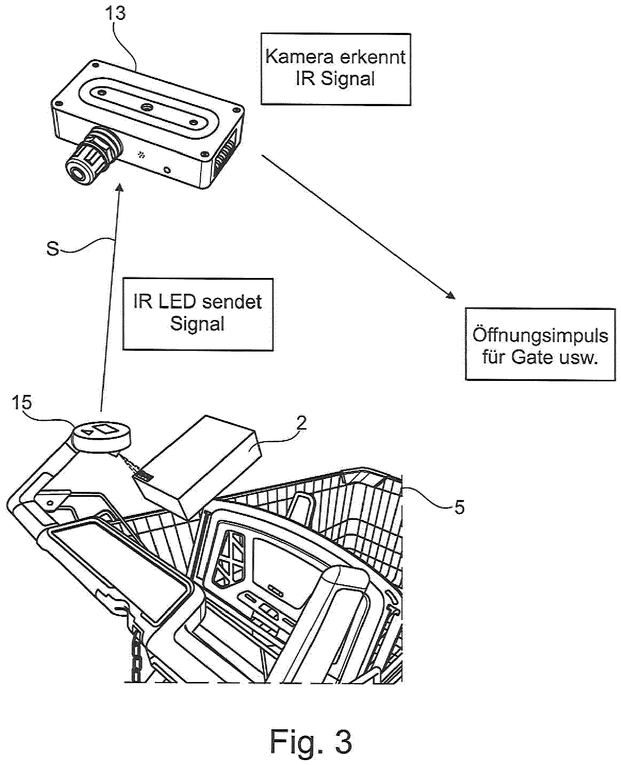

- **Figur 3**: eine vereinfachte Darstellung eines erfindungsgemäßen Systems in einer Ausführungsform nach welcher eine Transportgerätschaft mit einer Signalgebereinrichtung versehen ist, wobei anhand eines von der Signalgebereinrichtung ausgegebenen Signals erkannt werden kann, ob für die Passage eines Durchganges des Systems eine Berechtigung vorliegt;

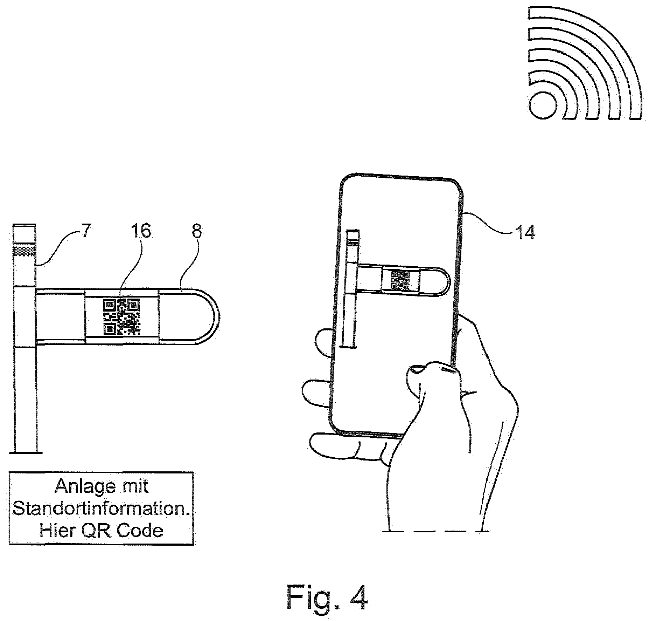

- **Figur 4**: eine vereinfachte Darstellung von Teilkomponenten eines erfindungsgemäßen Systems in einer Ausführungsform nach welcher ein Anwender der einen ordnungsgemäßen Bezahlvorgang abgewickelt hat seine Präsenz am Ort des Durchganges durch sein Mobiltelefon nachweisen kann, sodass in Verbindung mit diesem Nachweis der Durchgang in eine Freigabestellung verbracht werden kann.

Die Darstellung nach Figur 1 zeigt eine Schemadarstellung zur Veranschaulichung des Aufbaus und der Funktionsweise einer beispielhaften Variante eines erfindungsgemäßen Systems. Das System umfasst einen Warenscanner 1 in welchem die dort von einem Anwender A auf einen Übergabebereich 4 aufgelegten Waren 2 - hier lediglich beispielhaft ein Bierträger - erfasst werden. Die Erfassung erfolgt hier durch eine Scannereinrichtung 3. Diese Scannereinrichtung 3 erfasst etwaige auf den Waren 2 vorgesehenen Kennungen, insbesondere QR- oder Barcodes und/oder anderweitige Eigenschaften der Ware 2 wie z.B. die Raumform derselben oder die optische Erscheinung derselben. Die im Rahmen der Warenerfassung festgestellten Waren werden der Berechnung eines Kaufpreises zugrunde gelegt.

Die Waren 2 werden nach der Erfassung derselben in dem Übergabebereich 4 in eine Transportgerätschaft 5 übergeben. Nach Übergabe aller hierbei erfassten Waren 2 in die Transportgerätschaft 5 wird für die so gebildete Einheit ein Referenzphänomen oder Merkmal 12 erfasst. Dies erfolgt hier beispielhaft durch optische Erfassung der die Transportgerätschaft 5 umfassenden Einheit durch eine Erfassungseinrichtung 3a. Das Referenzphänomen kann jedoch auch alternativ schon aus den bei Warenaufgabe über die Scannereinrichtung 3 gewonnenen Daten abgeleitet werden. Im Nachgang hierzu erfolgt die Abwicklung eines Bezahlvorganges an einem Terminal 6. In Verbindung mit einem erfolgreichen Bezahlvorgang wird hierfür ein Berechtigungserwerb P dem Anwender zugeordnet. In Verbindung mit diesem Berechtigungserwerb qualifiziert sich das Merkmal 12 als ein Referenz-Merkmal dessen Feststellung im Bereich des Gates 7 es dem Anwender A ermöglicht, das Gate 7 zu passieren. Das Gate 7 umfasst ein Sperrglied 8 das selektiv in eine Sperrstellung und in eine Freigabestellung bringbar ist. In der Freigabestellung des Sperrglieds 8 kann der Anwender A den Durchgangsweg P passieren, insbesondere selbst gehend einen Einkaufswagen 5 mit ordnungsgemäß erworbenen Waren durch das Gate 7 schieben.

Das Sperrglied 8 wird über eine Antriebseinrichtung 9 angetrieben. Die Antriebseinrichtung wird über eine Leistungsstufe 10 elektrisch aktiviert. Die Leistungsstufe 10 ist mit einer zentralen Steuereinrichtung 11 signaltechnisch gekoppelt.

Bei diesem erfindungsgemäßen System erfolgt die Freigabe eines Durchganges P für einen Anwender A in Verbindung mit dem Vorliegen eines zugunsten des Anwenders A erfolgten Berechtigungserwerbs, wobei das Vorliegen des Berechtigungserwerbs im Bereich des Durchganges 7 aus der Erkennung eines Referenzphänomens oder Ereignisses 12 abgeleitet wird, das im Rahmen des Berechtigungserwerbs dem Anwender A als freigabeindikativ zugeteilt worden ist.

Bei dem hier vereinfacht dargestellten Ausführungsbeispiel handelt es sich bei dem Ereignis 12 um eine Raumforminformation zu der erworbenen Ware 2. Dieses Ereignis 12 dient in Verbindung mit einem erfolgreichen Zahlvorgang als Nachweis für den Erwerb der Berechtigung das Gate 7 zu passieren. Wird diese Ware 2, insbesondere eine individuelle Warenzusammenstellung im Bereich des Gates 7 von einer dort vorgesehenen Erfassungseinrichtung 13 erkannt, so wird das Vorliegen des Ereignisses 12 festgestellt - daraus die Passageberechtigung abgeleitet - und das Gate 7 gelangt in einen Zustand der eine Passage desselben erlaubt.

Bei dem Ereignis 12 kann es sich auch um Eigenschaften der Transportgerätschaft 5 handeln. Es kann sich auch um das Merkmal oder die Tatsache handeln, dass ein Zahlvorgang an dem Terminal 6 mit einem Mobiltelefon 14 abgewickelt wurde, oder dieses Mobiltelefon vom Anwender A im Übergabebereich 4 oder am Terminal 6 mitgeführt wurde. Es kann sich um Merkmale in einer optischen Erscheinung, insbesondere Bilderscheinung handeln.

Die Scannereinrichtung 3, 3a ist mit der zentralen Steuereinrichtung CPU signaltechnisch gekoppelt. Auch das Bezahlterminal 6 ist mit der zentralen Steuereinrichtung CPU signaltechnisch gekoppelt. Die Erfassungseinrichtung 13 und die Leistungsstufe 10 sind ebenfalls mit der zentralen Steuereinrichtung CPU signaltechnisch gekoppelt.

Bei jenem Ereignis oder nachfolgend als Referenz für den Berechtigungserwerb herangezogenen Erfassungsergebnis kann es sich um eine erkannte Raumform und/oder Erscheinung einer erworbenen Ware oder erworbenen Warenzusammenstellung handeln. Es kann sich um die optische Erscheinung einer erworbenen Ware oder Warenzusammenstellung und/oder des Anwenders handeln.

Weiterhin kann es sich bei diesem Ereignis oder Bezugsphänomen um die Erkennung einer verwendeten Warentransportgerätschaft handeln. Diese Erkennung kann insbesondere Al-basiert oder anderweitig bilderkennungsbasiert bewerkstelligt werden. Im Falle einer an der Transportgerätschaft mitgeführten Spezifikationseinrichtung kann es sich bei dem im Bereich des Gates abgefragten Ereignis um ein Signal handeln, das von einer Ausgabeeinrichtung ausgegeben wird, die an eine Warentransportgerätschaft angebunden oder in diese eingebunden ist. Dieses Signal kann auf optischem Wege bereitgestellt werden. Dieses optische Signal wird dabei vorzugsweise derart gebildet, dass dieses außerhalb des sichtbaren Wellenlängenbereichs von Licht liegt.

Es ist weiterhin möglich, das System so auszugestalten, dass es sich bei dem der Öffnung des Gates als Referenz für den Berechtigungserwerb herangezogenen Ereignis um den Verlauf eines Weges handelt den der Anwender zwischen dem Ort des Berechtigungserwerbs und dem Durchgang begeht. Der Verlauf dieses Weges kann über die Signalgebereinrichtung kommuniziert werden. Er kann insbesondere als Vektor beschrieben werden. Der Vektor hat dann hinsichtlich der Öffnung des Gates Gültigkeit sofern an seinem Ausgangsort ein Berechtigungserwerb erfolgt ist. Die Wegerfassung kann insbesondere durch Beschleunigungssensoren bewerkstelligt werden, die Teil der an die Transportgerätschaft angebundenen elektronischen Gebereinrichtung bilden.

Bei dem im Bereich des Gates abgefragten Ereignis kann es sich auch um eine Information handeln, die seitens des Anwenders durch ein Mobiltelefon bereitgestellt wird. Diese Information kann in vorteilhafter Weise am Ort des Durchganges singulär generiert werden, sodass die Präsenz des Anwenders am Ort des Durchganges über das Mobiltelefon des Anwenders nachgewiesen wird. Vorzugsweise erfolgt der Nachweis der Präsenz des Anwenders am Durchgang unter Nutzung der Kamera eines anwenderseitigen Mobiltelefons.

Die Darstellung nach Figur 2 veranschaulicht ein Gate 7 mit einer in dieses in Form einer Kamera eingebundenen Erfassungseinrichtung 13. Bei dem Zugang eines Anwenders zu diesem Gate 7 wird über die Erfassungseinrichtung 13 die optische Erscheinung einer Transportgerätschaft 5 mit den darin aufgenommenen Waren erfasst. Anhand dieser optischen Erscheinung wird überprüft ob ein Berechtigungserwerb für den Durchgang durch das Gate 7 vorliegt. Dieser Berechtigungserwerb wird beispielsweise als nachgewiesen gehandhabt, wenn zwischen der erfassten optischen Erscheinung der Waren in der Transportgerätschaft 5 und einem Merkmal oder einer Bildinformation das/die im Bereich des Berechtigungserwerbs oder der Warenaufgabe (vgl. Fig. 1) dem Anwender zugeteilt wird eine hinreichende Korrelation besteht. Diese Korrelation wird insbesondere KI-basiert festgestellt. Es wird insbesondere eine Bildauswertung durchgeführt die ein Vergleichsergebnis zwischen erhobenen Bilddaten im Bereich des Berechtigungserwerbs und den im Bereich des Gates 7 in Verbindung mit der dort integrierten Erfassungseinrichtung 13, insbesondere Kameraeinrichtung erhobenen Bilddaten generiert. Bei einer als hinreichend erkannten Korrelation wird das Vorliegen eines Berechtigungserwerbs für den Durchgang durch das Gate 7 festgestellt und das Sperrglied 8 in eine Freigabestellung verbracht. Nach Durchgang des Anwenders durch das Gate 7 wird das diesem zugeteilte Merkmal 12 (vgl. Fig. 1) für den Durchgang durch das Gate 7 als verbraucht verbucht und wird für eine erneute Passage unwirksam.

Die Zuordnung des Merkmals 12 zu dem Anwender kann erleichtert werden, indem an der Transportgerätschaft 5 Individualisierungsmerkmale 5a, beispielsweise in Form einer Tafel mit einem QR-Code vorgesehen sind, oder farbliche oder anderweitige grafische Kennzeichnungen. Es ist auch möglich, an der Transportgerätschaft 5 für einen Anwender weitgehend unauffällige Kennzeichnungsmittel vorzusehen, die eine Erkennung einer Transportgerätschaft 5 und eine Identifizierung derselben als temporären Exit-Berechtigungsnachweis ermöglichen.

Die erfindungsgemäße Lösung ermöglicht die Erkennung von Produkten wie Durchgangssysteme, Einkaufswagen, Rollcontainer mit Hilfe von Computervisionsmodellen zum Zweck der Identifizierung.

Durch das Erkennen von spezifizierten Produkten kann auf andere Erkennungsmethoden wie RFID, Bluetooth usw. für bestimmte Anwendungen verzichtet werden und somit die notwendige Hardware reduziert werden. Durch die Objekterkennung kann ein Durchgangssystem7 zusätzlich dafür genutzt werden, verschiedene vom Anwender oder Systembetreiber für die Warenhandhabung genutzte Produkte (z.B. Einkaufswagen, Transportwagen ) zu erkennen und falls erforderlich den nötigen Zugang freizugeben. Aufgrund des geringen Hardwarebedarfes ist eine aufwändige und teure Integration im Gebäude nicht notwendig. Zusätzlich müssen die zu erkennenden Gerätschaften nicht separat mit Sensoren ausgestattet werden.

Bei der in Figur 2 dargestellten Ausführungsform des Gates ist in dieses eine Erfassungseinheit 13 integriert. Die in das Gate 7 integrierte kamerabasierte Sensorik kann für die Erkennung verschiedenster Ereignisse herangezogen werden, insbesondere für die Erkennung bestimmter Transportgerätschaften. Dieses Konzept generiert gegenüber herkömmlichen Bauformen vorrichtungs- und kostentechnische Vorteile. Insbesondere können hierdurch Näherungssensoren und Lichtschranken zur Öffnung des Gates durch die kamerabasierte Sensorik ersetzt werden. Eine mit der Erfassungseinrichtung 13, insbesondere Kameraeinrichtung gekoppelte Steuereinrichtung wertet die erfassten Bildinformationen algorithmisch, insbesondere KI-basiert aus und erkennt herannahende Personen. Im Rahmen dieser Erkennung kann dann festgestellt werden, ob das Gate zu öffnen ist oder für die erkannte Person oder Transportgerätschaft oder Warenzusammenstellung keine Durchgangsberechtigung vorliegt oder auf diesem Wege festgestellt werden kann. Weiterhin kann in Verbindung mit der erfindungsgemäß in das Gate integrierten Erfassungseinrichtung auch eine Schwenkbereichsüberwachungen für das Sperrorgan des Gates abgewickelt werden, so dass zumindest bezüglich Ultraschall, LIDAR-Sensoren oder Lichtschranken eine Redundanz besteht oder diese ersetzt werden können. Die Erfassungseinrichtung ermöglicht damit eine insbesondere Klbasierte Erkennung von Personen im Bereich des Gates und dabei auch im Schwenkbereich des Sperrorganes durch eine in eine Struktur des Gates, insbesondere den oberen Bereich eines Standpfostens integrierte Erfassungseinrichtung, insbesondere Kameraeinrichtung.

Die Darstellung nach Figur 2 zeigt insgesamt eine Gateeinrichtung 7 zur Bereitstellung eines selektiv sperrbaren Durchgangsweges durch Ansteuerung eines Sperrorganes 8 das in eine Freigabestellung und in eine Sperrstellung verlagerbar ist, wobei das Sperrorgan an eine Pfosten- oder Geländereinrichtung angebunden ist und in einem oberen Bereich der Pfosten oder Geländereinrichtung eine Erfassungseinrichtung 13 vorgesehen ist, wobei die Erfassungseinrichtung 13 derart ausgebildet ist, dass diese Bilddaten eines sich auf das Gate 7 zubewegenden und/oder durch dieses hindurchbewegenden Anwenders oder einer Transportgerätschaft 5 erhebt und die so erfassten Bilddaten einer Auswertung unterzogen werden, wobei die Ansteuerung des Sperrorganes 8 in Verbindung mit dem Ergebnis der Auswertung abgewickelt wird.

Die Darstellung nach Figur 3 veranschaulicht eine Ausführungsform für eine Teilkomponente des erfindungsgemäßen Systems, bei welcher an einer Transportgerätschaft 5 eine Gebereinrichtung 15 vorgesehen ist. Bei dieser Gebereinrichtung 15 handelt es sich um eine elektronisch/optische Gebereinrichtung 15 welche ein im nicht-sichtbaren Wellenlängenbereich liegendes optisches Signal S aussendet. Dieses Signal S wird durch eine Erfassungseinrichtung 13 erfasst und in Verbindung mit einer zentralen Steuereinheit CPU oder einer im Bereich der Erfassungseinrichtung 13 vorgesehene Steuereinrichtung ausgewertet. Diese Auswertung führt eine Abfrage durch, ob das erfasste Signal S den Nachweis eines Berechtigungserwerbs erbringt. Hierzu wird überprüft ob für den Informationsgehalt oder die Spezifität des Signales S ein Berechtigungserwerb dokumentiert ist. Ein Berechtigungserwerb liegt vor, wenn im Bereich einer Warenübergabe in die Transportgerätschaft für den von dem Signal übermittelten Informationsgehalt ein ordnungsgemäß abgewickelter Bezahlungs- oder Wertstellungsvorgang dokumentiert ist. Hierzu wird das Signal S vorzugsweise auch im Bereich der Warenübergabe erfasst. Die Gebereinrichtung 15 kann eine Energiespeichereinrichtung aufweisen. Sie kann so ausgebildet sein, dass diese Gebereinrichtung 15 von einem Außenereignis temporär aktivierbar ist. Diese Aktivierung kann durch Schnittstelleneinrichtungen bewerkstelligt werden die beispielsweise auf optischem Wege oder feldelektrischem Wege oder elektromagnetischem Wege einen Signalempfang ermöglicht. Die Gebereinrichtung 15 kann eine Energieeinspeiseeinrichtung insbesondere in Form einer Solarzelle oder Photodiode oder einer Induktionswicklung oder Trägheitsgeneratoren aufweisen und insbesondere im Bereich eines Gates hinreichend mit Energie versorgt werden um ein entsprechendes Signal S abzugeben. Das Signal S kann ein hinsichtlich seines Informationswertes quasistatisches Signal sein, dass von der Gebereinrichtung 15 ausgesendet wird und beispielsweise einen gleichbleibenden Code darstellt. Es ist auch möglich, die Gebereinrichtung 15 so zu gestalten, dass diese eine Speichereinrichtung umfasst in welche im Bereich eines Kassensystems ein Informationsinhalt eingegeben oder darin generiert wird, der indikativ ist für das Vorliegen eines Berechtigungserwerbs oder das Vorliegen eines Berechtigungserwerbes auf Abfrage im Bereich eines Gates 7 durch Ausgabe des Signals S stellvertretend bestätigt.

Es ist möglich das von der Gebereinrichtung 15 generierte Signal S in Verbindung mit einem Warenscanvorgang zu generieren. Im Bereich des Gates 7 kann dann zur Öffnung desselben eine Ware 2 von einer Scannereinrichtung der Gebereinrichtung 15 gescannt werden. Dieser Scanvorgang führt zu einer mit der Warenkennung korrelierenden Generierung des Signales S. Das Signal S wird von der Erfassungseinrichtung 13 erfasst. Das so erfasste Signal 13 wird dazu herangezogen festzustellen ob unter Rückgriffnahme auf den Bezahlvorgang ein Berechtigungserwerb für den Durchgang durch das Gate 7 vorliegt.

Mit dem in Figur 3 skizzierten System wird es möglich, im Einkaufsbereich eines Supermarktes Waren 2 in die Transportgerätschaft 5 zu verbringen und dabei zu scannen. Es kann hierbei für die Warenzusammenstellung der Erwerbspreis errechnet werden und die Waren müssen nicht mehr auf eine Übergabeeinrichtung aufgegeben werden. Das erfindungsgemäße Gate 7 kann dann dazu dienen einen Zugang zu einem Bezahlbereich zu ermöglichen. Der Bezahlvorgang kann bargeldlos abgewickelt werden, indem bei kurzer Verweilzeit vor einem Gate der Bezahlvorgang abgewickelt wird und nach Quittierung durch einen Anwender als abgeschlossen betrachtet wird. Über die dem Gate vorgelagerte Erfassungseinrichtung 13 kann dann auch ermittelt werden, ob die sich dort darstellende Warenzusammenstellung sich als vollständig erfasste Warenzusammenstellung qualifiziert. Dies kann unter Rückgriffnahme auf unterschiedliche Verifikationsansätze erfolgen.

Das erfindungsgemäße Konzept ermöglicht die Öffnung eines Exit-Gates von einem Einkaufswagen (Smart Trolley ) durch Verwendung einer IR- LED und ermöglicht es ein Exit-Gate nach erfolgreichem Bezahlvorgang zu öffnen. Hierbei kann die Generierung eines QR Codes entfallen und auch eine Verbindung mit dem Kunden-Smarphone oder eine aktive Bluetoothverbindung, damit die Geräte kommunizieren können ist hierbei nicht zwingend erforderlich, auch von einem zusätzlichen Druck einer Rechnung mit Barcode/QRCode oder Kommunikation über Bluetooth kann abgesehen werden. Bei der beschriebenen Ausführungsform befindet sich am Einkaufswagen eine Infrarot LED. Nach erfolgreichem Bezahlvorgang schaltet sich die LED ein und /oder generiert eine bestimmte Blinkfrequenz oder ein codiertes Signal mit einem umfangreicheren Informationsinhalt. Der für das menschliche Auge unsichtbare Lichtbereich wird durch eine Kamera erkannt. Dieses Erkennen führt zu einer Öffnung des Exit Gates durch ein übergeordnetes System. Es ist keine direkte Kommunikation zwischen Einkaufswagen und Exit Gate notwendig. Die Kosten und der Konfigurationsaufwand sind geringer als herkömmliche Lösungen. Für einen potentiellen Dieb ist das System nicht erkenntlich und dient somit zur Diebstahlreduzierung.

Die Darstellung nach Figur 4 veranschaulicht eine Ausgestaltung des erfindungsgemäßen Systems, bei welcher im Bereich eines Gates 7 ein Kennzeichnungsmittel 16 vorgesehen ist, das hier beispielhaft als Schild mit einem QR-Code dargestellt ist. Betritt ein Anwender A den Bereich des Gates 7, so kann er dort über die Kameraeinrichtung seines Smartphones 14 das Kennzeichnungsmittel 16 erfassen. Im Zeitrahmen dieser Erfassung kann die Anwesenheit des Anwenders A im Bereich des Gates 7 erkannt und für die Abfrage einer Durchgangsberechtigung herangezogen werden. Diese Durchgangsberechtigung kann als vorliegenden gehandhabt werden, wenn ein Bezahlvorgang mit diesem Mobiltelefon abgewickelt wurde, oder dieses Mobiltelefon vom Anwender A im engen zeitlichen Umfeld der Warenverbringung in die Transportgerätschaft oder der Abwicklung des Bezahlvorganges mitgeführt wurde. Die Erkennung des Mobiltelefons kann durch Interaktion mit diesem oder lediglich durch Aufzeichnung von Signalen oder Informationsinhalten erfolgen, die von dem Telefon ausgegeben werden, z.B. Suchanfragen nach einer WLAN-Umgebung, Bluetooth-Koppelungsanfragen usw. Das Mobiltelefon 14 ist vorzugsweise mit einer App konfiguriert, die eben für die Gate-Aktivierung geeignete Funktionen bereitstellt. Es kann sich hierbei insbesondere für eine Supermarktspezifische oder Supermarktkettenspezifische App handeln oder eine zukünftige für Einzelhandelsvorgänge allgemein ausgelegte App d.h. Anwendungssoftware handeln, die auf dem Gerät installiert ist oder über dieses Gerät als Systemkomponente abwickelbar ist. Bei dieser App kann es sich auch um einfachste Arbeitsprogramme handeln, die lediglich bewirken, dass der über eine Kameraeinrichtung erfasste Bildinhalt oder Informationsinhalt eines Codeträgers (z.B.16) erfasst und an eine Schnittstelle in der Umgebung des Gates 7 übermittelt werden kann.

Das in Verbindung mit Figur 4 beschriebene Konzept ermöglicht eine Positionsbestimmung oder Eventauslösung im Eingangs- und Ausgangsbereich durch Scannen eines QR Codes / Barcodes am Schwenkarm der Durchgangslösung (Eingangsanlage, Exitgate, Zutrittskontrolle) oder über Erkennung anhand eines Visionsmodelles. Durch dieses Konzept wird es insbesondere möglich mit mobilen Anwendungen (Scan&Go) eine Position vor einer Durchgangslösung festzustellen unabhängig von der Genauigkeit der Standorterfassung via WLAN oder Bluetooth. Erfindungsgemäß kann in Verbindung mit Kameras nach Scannen oder Erkennen der Durchgangsanlage eine Verknüpfung zur Position erkannt werden oder in Verbindung mit einer App ein Impuls an die Durchgangslösung gesendet werden. Mit dieser Funktion kann in Verbindung mit Kameras die Zuordnung zum erfolgreichen Bezahlvorgang gelöst werden im Scan&Go Bereich ohne ein weiteres Scannen des generierten Kundenbeleges oder in Verbindung mit einem Smartphone die unabhängige Öffnung durch die App durchgeführt werden.

Die oben beschriebenen Konzepte können als Einzelkonzepte für die Veranlassung eines hinsichtlich des Berechtigungserwerbs verifizierten Durchgangs durch eine Gateeinrichtung 7 herangezogen werden. Diese Konzepte können auch kombiniert werden, sie können auch in einer Weise bereitgestellt werden die anwenderseitig eine Auswahl über die Art der Erbringung des Autorisierungsnachweises ermöglicht. Die Rückgriffnahme auf einen Überprüfungsvorgang bei der Betätigung eines Gates 7 kann von weiteren Umständen abhängig gemacht werden. So kann insbesondere bei hinsichtlich des Warenumfangs oder des Warenwertes als sich unkritisch darstellenden oder als insgesamt mit hoher Wahrscheinlichkeit manipulationsfreien Warenerwerben der Sicherheitsstandard bei der Verifikation des Vorliegens eines Berechtigungserwerbs reduziert werden.

Das Gate 7 kann so installiert sein, dass über dieses eine Schleusenfunktion realisiert wird, die im Falle einer nicht hinreichend nachgewiesenen Durchgangsberechtigung den Anwender zu einem Kassensystem führt in welchem eine Warenerfassung mit einem erhöhten Identifikationsgrad, insbesondere eine personengestützte Warenerfassung erfolgt.

Das erfindungsgemäße Konzept ermöglicht auch weitergehende Operationen zur Abwicklung eines Warenmanagements sowie zur Bewerkstelligung von Wertstellungsvorgängen. So ist es möglich, hierdurch auch eine Erfassung und Abrechnung von Leergutrückgaben vorzunehmen. Ein Anwender kann hierbei beispielsweise mit einer in einem Fahrrad- oder PKW-Parkplatz oder Eingangsbereich übernommenen Transportgerätschaft in diese mitgebrachtes Leergut einlegen. Beim Betreten einer Geschäftszone kann der Anwender das Leergut in einen Aufgabebereich aufgeben. Das hierbei erworbene Pfandguthaben wird der Transportgerätschaft 5 zugewiesen. Nach Abwicklung eines Warenerwerbs oder auch lediglich eines Transfers der Transportgerätschaft 5 zu einem Kassenbereich kann in Verbindung mit einer dort erfolgenden Identifikation der Transportgerätschaft 5 eine Auszahlung oder Buchung des Leergutguthabens erfolgen.

Durch das erfindungsgemäße System wird es möglich ein Kontrollverfahren abzuarbeiten, das für einen Anwender einen hohen Anwendungskomfort und für den Systembetreiber einen hinreichend hohen Schutz gegen Manipulationen bietet. Bei dem durch das erfindungsgemäße System realisierbaren Verfahren zur kontrollierten anwenderspezifischen Öffnung einer Durchgangsanlage erfolgt in einem der Durchgangsanlage vorgelagerten Bereich ein Berechtigungserwerb durch einen Zahlvorgang. Für den Anwender wird ein Zustand oder eine Eigenschaft festgestellt, die als Nachweis für diesen Berechtigungserwerb herangezogen wird. Diese Eigenschaft wird im Bereich eines Exit-Gates erkannt und zur Herbeiführung eines Öffnungszustands der Durchgangsanlage herangezogen. Nach Passage der Durchgangsanlage wird diese Eigenschaft als verbraucht oder ungültig verworfen und kann keine erneute Öffnung der Durchgangsanlage veranlassen. Soweit sich im Sonderfall durch gleichartige Warenzusammenstellungen gleichartige Berechtigungsreferenzen ergeben, ergibt sich für jede dieser Berechtigungsreferenzen eine einmalige Öffnungswirkung für das Exit-Gate. Soweit mehrere Exit-Gates parallel betrieben werden, gilt eine Berechtigungsreferenz nach der ersten durch diese veranlasste Freigabe eines Exit-Gates als verbraucht.

Die Begrifflichkeiten Ereignis, Zustand, Eigenschaft, Berechtigungsreferenz, beschreiben im Kontext der obigen Ausführungen Eigenschaften die einer Warenzusammenstellung, oder der Einheit aus Anwender, Waren und Transportgerätschaft zuerkannt werden und deren Vorliegen am Exit-Gate festgestellt werden kann. Die positive Feststellung dieser Eigenschaften erlaubt in Verbindung mit einem dem Anwender zugeschriebenen korrekten Warenerwerb eine Passage eines Exit-Gates.

## Patentansprüche

1. System zur selektiven Freigabe eines Durchganges für einen Anwender in Verbindung mit dem Vorliegen eines zugunsten des Anwenders erfolgten Berechtigungserwerbs, wobei das Vorliegen des Berechtigungserwerbs im Bereich des Durchganges aus der Erkennung eines Ereignisses abgeleitet wird, das im Rahmen des Berechtigungserwerbs dem Anwender als freigabeindikativ zugeteilt worden ist.

2. System nach Anspruch 1, **dadurch gekennzeichnet, dass** dieses System ein Gate umfasst, und/oder dass dieses System eine Einrichtung zur Abwicklung eines Bezahlvorganges umfasst und/oder dass dieses System eine Scannereinrichtung zur Erfassung von anwenderseitig zu erwerbenden Waren umfasst.

3. System nach Anspruch 1 oder 2, **dadurch gekennzeichnet, dass** es sich bei diesem Ereignis um eine erkannte Raumform und/oder Erscheinung einer erworbenen Ware oder erworbenen Warenzusammenstellung handelt.

4. System nach wenigstens einem der Ansprüche 1 bis 3, **dadurch gekennzeichnet, dass** es sich bei diesem Ereignis um die Erkennung einer verwendeten Warentransportgerätschaft handelt.

5. System nach wenigstens einem der Ansprüche 1 bis 4, **dadurch gekennzeichnet, dass** diese Erkennung Al-basiert bewerkstelligt wird.

6. System nach wenigstens einem der Ansprüche 1 bis 5, **dadurch gekennzeichnet, dass** es sich bei diesem Ereignis um ein Signal handelt, das von einer Ausgabeeinrichtung ausgegeben wird, die an eine Warentransportgerätschaft angebunden oder in diese eingebunden ist.

7. System nach wenigstens einem der Ansprüche 1 bis 6, **dadurch gekennzeichnet, dass** das Signal auf optischem Wege bereitgestellt wird und dass insbesondere dieses optische Signal außerhalb des sichtbaren Wellenlängenbereichs von Licht liegt.

8. System nach wenigstens einem der Ansprüche 1 bis 7, **dadurch gekennzeichnet, dass** es sich bei diesem Ereignis um den Verlauf eines Weges handelt den der Anwender zwischen dem Ort des Berechtigungserwerbs und dem Durchgang begeht.

9. System nach wenigstens einem der Ansprüche 1 bis 8, **dadurch gekennzeichnet, dass** es sich bei dem Ereignis um eine Information handelt, die seitens des Anwenders durch ein Mobiltelefon bereitstellbar ist.

10. System nach wenigstens einem der Ansprüche 1 bis 9, **dadurch gekennzeichnet, dass** diese Information erst am Ort des Durchganges bereitstellbar ist, wobei die Präsenz am Ort des Durchganges über das Mobiltelefon des Anwenders nachgewiesen wird.

11. System nach Anspruch 10, **dadurch gekennzeichnet, dass** der Nachweis der Präsenz des Anwenders am Durchgang unter Nutzung der Kamera eines anwenderseitigen Mobiltelefons erbracht wird.

12. Verfahren zur selektiven Freigabe eines Durchganges für einen Anwender in Verbindung mit dem Vorliegen eines zugunsten des Anwenders erfolgten Berechtigungserwerbs, wobei:
- im Rahmen des Berechtigungserwerbes eine Eigenschaft des Anwenders, der Waren und/oder einer Warentransportgerätschaft festgelegt wird,
- im Bereich des Exit-Gates eine Untersuchung hinsichtlich des Vorliegens dieser Eigenschaft abgewickelt wird und
- bei Vorliegen dieser Eigenschaft das Exit-Gate in einen Durchgangszustand verbracht wird, der einen Durchgang durch das Exit-Gate gestattet.

13. Gateeinrichtung zur Bereitstellung eines selektiv sperrbaren Durchgangsweges durch Ansteuerung eines Sperrorganes das in eine Freigabestellung und in eine Sperrstellung verlagerbar ist, wobei das Sperrorgan an eine Pfosten- oder Geländereinrichtung angebunden ist und in einem oberen Bereich der Pfosten- oder Geländereinrichtung eine Erfassungseinrichtung vorgesehen ist, wobei die Erfassungseinrichtung derart ausgebildet ist, dass diese Bilddaten eines sich auf das Gate zubewegenden und/oder durch dieses hindurchbewegenden Anwenders oder einer Transportgerätschaft erhebt und die so erfassten Bilddaten einer Auswertung unterzogen werden, wobei die Ansteuerung des Sperrorganes in Verbindung mit dem Ergebnis der Auswertung abgewickelt wird.
